# EUROPEAN PATENT SPECIFICATION

(11) **EP 3 961 606 B1**
(45) Date of publication and mention of the grant of the patent: **16.07.2025**
(21) Application number: 20192678.9
(22) Date of filing: 25.08.2020
(51) Int. Cl.: G09B 23/28

(54) **SCALING TRAINING TOOL, METHOD FOR TRAINING THE REMOVAL OF CALCULUS AND METHOD FOR MAKING AND/OR PREPARING A SCALING TRAINING TOOL**
WERKZEUG ZUM TRAINIEREN DER ZAHNSTEINENTFERNUNG, VERFAHREN ZUM TRAINIEREN DER BESEITIGUNG VON ZAHNSTEIN UND VERFAHREN ZUR HERSTELLUNG UND/ODER VORBEREITUNG EINES WERKZEUGS ZUM TRAINIEREN DER ZAHNSTEINENTFERNUNG
OUTIL D'APPRENTISSAGE DU DÉTARTRAGE, PROCÉDÉ D'APPRENTISSAGE DE L'ÉLIMINATION DU TARTRE ET PROCÉDÉ DE FABRICATION ET/OU DE PRÉPARATION D'UN OUTIL D'APPRENTISSAGE DU DÉTARTRAGE

(43) Date of publication of application: 02.03.2022
(73) Proprietor: Ferton Holding S.A., 2800 Delémont (CH)
(72) Inventor: GATTI, Simone, 1022 Chavannes-près-Renens (CH); DONNET, Marcel, 01630 Saint Jean de Gonville (FR); FOURNIER, Maxime, 1010 Lausanne (CH)
(74) Representative: Müller Schupfner & Partner Patent- und Rechtsanwaltspartnerschaft mbB (Muc)

(56) References cited:
- US-A1- 2006 003 287
- ANONYMOUS: "Scaling, Root Planing Area ; Calculus Removal Stick [PER1013-T-HD] ; (Product Preview) |", 19 June 2018 (2018-06-19), pages 1, XP055740672, Retrieved from the Internet <URL:http://www.nissin-dental.net/products/DentalTrainingProducts/Scaling-RootPlaning/PER1013-T-HD/index.html> [retrieved on 20201015]
- ANONYMOUS: "Frasaco : Liste des fournitures 2014 | 2015", 27 February 2014 (2014-02-27), pages 1 - 96, XP055741006, Retrieved from the Internet <URL:https://www.fichier-pdf.fr/2014/02/27/frasaco-2014-2015-franzoesisch/frasaco-2014-2015-franzoesisch.pdf> [retrieved on 20201016]
- ANONYMOUS: "Dental Calculus Set | Dental Calculus Set |", 7 January 2011 (2011-01-07), pages 1, XP055740675, Retrieved from the Internet <URL:https://www.nissin-dental.net/products/DentalTrainingProducts/Parts/Dental_Calculus_Set/index.html> [retrieved on 20201015]
- ANONYMOUS: "Dental Scaling (using a tile model)", 2 June 2018 (2018-06-02), pages 1 - 13, XP055740606, Retrieved from the Internet <URL:http://www.bristol.ac.uk/media-library/sites/vetscience/documents/clinical-skills/Dental%20Scaling.pdf> [retrieved on 20201015]
- ANONYMOUS: "Artificial Calculus for scaling practice", 1 April 2015 (2015-04-01), XP055740866, Retrieved from the Internet <URL:https://www.trimunt.co.jp/wp-content/uploads/2015/03/TRBB-18.pdf> [retrieved on 20201016]
- DONALD E KNAPP ET AL: "A Method of Producing Artificial Calculus on Typodont Teeth", THE JOURNAL OF PERIODONTOLOGY, 1 January 1956 (1956-01-01), pages 1 - 2, XP055740731, Retrieved from the Internet <URL:https://deepblue.lib.umich.edu/bitstream/handle/2027.42/141501/jper0290.pdf?sequence=1&isAllowed=y> [retrieved on 20201016]
- ANONYMOUS: "What is the difference between dental stone and plaster of Paris?", 3 February 2020 (2020-02-03), pages 1 - 4, XP055740955, Retrieved from the Internet <URL:https://findanyanswer.com/what-is-the-difference-between-dental-stone-and-plaster-of-paris> [retrieved on 20201016]

## Description

The invention relates to a scaling training tool, a method for training the removal of calculus and to a method for making and/or preparing a scaling training tool.

Scalers, especially ultrasonic scalers, are well known in the prior art. These scalers are used to remove calculus from the teeth of a human. The removal of calculus can be very pain full and/or harmful for the patient, if it is not carried out correctly. Thus, the dental students, prophylaxis assistants and/or operators of these scalers need to be well trained, in order to prevent the patient to be harmed during the removal of calculus. It is already known from the prior art to use jaw models or manikins to train the students. Furthermore, it is also known to use jaws of dead animals to train the students. However, all these known scaling training tools are expensive and complicated to manufacture and cannot or at least hardly be reused. In addition, these are often flat and/or made of plastics so any training does not reflect the real feeling as in the mouth of a patient. Thus, the training using these tools need to be improved.

From the prior art, calculus removal sticks are known, which were distributed by the company Nissin Dental Products Inc, the calculus removal sticks are intended for training dental treatments. The company FRASACO also offers models to train the dental treatment (see also Anonymous: "Scaling, Root Planing Area ; Calculus Removal Stick [PER1013-T-HD] ; (Product Preview) |", , 19 June 2018 (2018-06-19), page 1, XP055740672, Retrieved from the Internet: URL:http://www.nissin-dental.net/products/ DentalTrainingProducts/Scaling-RootPlaning/PER1013-T-HD/index.html).

Considering the above, it is an object of the invention to provide a cheap and reliable training opportunity for training the removal of calculus as similar as possible compared to real teeth.

This object is achieved by a scaling training tool according to claim 1, by a method for training the removal of calculus according to claim 14 and by a method for making and/or preparing a scaling training tool according to claim 15. Preferred embodiments and additional features are incorporated in the dependent claims, the description and the figures
According to a first aspect of the present invention a scaling training tool is provided, especially for training the usage of an ultrasonic scaler for removing calculus, comprising a main body, wherein the main body extends along a center axis and comprises an outer surface, wherein the outer surface is at least partly coated with a coating, and wherein the outer surface is shaped, preferably convexly shaped.

The scaling training tool is intended for training the usage of an ultrasonic scaler for removing calculus, especially an ultrasonic scaler using piezo-ceramic actuation elements. Thus, the scaling training tool is in particular intended for training persons, such as students, to get used to the usage of a scaler for removing calculus, which is naturally located on the teeth of a human patient. The scaling training tool according to the invention has a main body. The main body is intended to be at least party coated with the coating. In other words can the main body be a kind of carrier for the coating, which is applied to an outer surface of the main body. This main body is preferably integrally formed and/or single pieced, in order to be mechanically reliable and stable. The main body of the training tool extends along a center axis. This center axis is an axis pathing through the main body. Additionally, the center axis can path or extend through the center of gravity of the main body and/or wherein the main body has its longest main dimension along the center axis.

The main body comprises an outer surface, wherein the outer surface is shaped, preferably convexly shaped. The outer surface of the main body of the training tool is intended to simulate the outer surface or outer contour of a human tooth. In order to approximate the shape of a human tooth, the outer surface is shaped, preferably convexly shaped. The outer surface of the main body at least partly bounds the main body towards the surrounding, preferably at least in a direction pointing away from the center axis. This means that the outer surface of the main body forms at least a part of the outer contour of the main body. Preferably, the outer surface forms the entire outer contour of the main body, or at least that part of the outer contour of the main body which is bounding the main body in a direction pointing away from the center axis. In one embodiment the main body is a cylinder, especially a hollow cylinder.

The outer surface is at least partly coated with the coating, wherein this coating is used to simulate calculus which is naturally located on an outer surface or an outer contour of a human tooth. Thus, it is in general preferred that the coating is having the same or similar mechanical properties as natural calculus and/or wherein the coating is bonded to the outer surface of the main body similarly in comparison to the bonding between natural calculus and a human tooth. Preferably, the outer surface is at least coated in such a way, that there exists a cutting plane perpendicular to the center axis, wherein in this cutting plane the whole outer surface and/or the whole contour of the outer surface is coated with the coating. By doing so, the outer surface can easily be coated with the coating. Preferably, the outer surface, at least in the region coated with the coating, has a hardness of at least 200 HV, preferably in a range between 250 HV and 600 HV. By designing the outer surface to have a hardness of at least 200 HV a feeling similar to the feeling, when removing calculus from a human tooth, can be realized.

The training tool according to the invention can easily and cheaply be manufactured and at the same time provides a reliable training opportunity for training and/or simulating the removal of calculus from human teeth. Additionally, the outer surface can easily be recoated, thus, the training tool according to the invention can easily be reused.

Preferably, at least that part of the outer surface, which is coated with the coating, has a constant curvature radius. Due to the fact that natural teeth of a human body are also curvedly shaped, a curved outer surface having a constant curvature radius is a good approximation of an outer surface of a natural tooth of a human, wherein at the same time an outer surface having a constant curvature radius can be manufactured in a cost efficient way. For example an outer surface having a constant curvature radius - at least in that part of the outer surface, which is coated with the coating - can be achieved by designing the outer surface spherically, cylindrically and/or conically. Preferably, the curvature radius of the outer surface is constant in at least one plane perpendicular to the center axis. Thus, if the outer surface is curved in multiple dimensions, at least the curvature radius in a plane perpendicular to the center axis is preferably constant.

In a preferred embodiment, the center point of the curvature radius of the outer surface lies on the center axis of the main body. By doing so, the outer surface can easily be manufactured and, therefore, the scaling training tool can be manufactured cost efficiently. The center point of the curvature is preferably a point in space, in particular in a plane perpendicular to the center axis, which is equally distanced to all points of the curvature radius of the outer surface.

In another preferred embodiment, the main body has a length in the direction of the center axis, wherein the ratio of the curvature radius to the length of the main body is in a range between 0.001 and 0.1, especially in a range between 0.01 and 0.1. The length of the main body along the direction of the center axis is in particular the total length of the main body along this axis. Preferably, as already explained, the main body has its longest main dimension along the center axis. The relevant curvature radius on the other hand is in particular the constant curvature radius of the outer surface in a plane perpendicular to the center axis. By choosing the ratio of the curvature radius to the length of the main body in a range between 0.01 and 0.1, the training tool can easily be handled, thus, the coating of the outer surface can be simplified when the ratio is in a range between 0.01 and 0.1. Should the ratio of the curvature radius to the length of the main body be in a range between 0.01 and 0.1, a good approximation of a natural tooth of a human can be achieved. Thus, resulting in a realistic training situation.

According to the present invention the main body is a hollow body, especially a hollow tube, in particular, having a predetermined material thickness, at least in the region of the outer surface coated with the coating. By designing the main body as a hollow body a misalignment of the scaler causes a vibration of the main body, which can be heard. For example such a misalignment is present, if the scaler or the removal tip of the scaler is applied in a normal direction relative to the outer surface. However, if the scaler, especially the removal tip of the scaler, is applied correctly, for example in a tangential direction relative to the outer surface of the hollow main body, no sound or at least only a quiet sound is created. Thus, by designing the main body as a hollow body a very effective scaling training tool can be achieved, which automatically indicates a misusage or misalignment of the scaler. The predetermined material thickness, at least in the region of the outer surface coated with the coating, is preferably the average material thickness, in the region of the outer surface coated with the coating. However, it is preferable that the predetermined material thickness is constant, at least in the region coated with the coating. By using a constant material thickness the production costs of the scaling training tool can be reduced. Preferably, the material thickness is measured in a direction normal to the outer surface or normal to the outwardly bounding surfaces of the main body. Furthermore, by choosing a constant predetermined material thickness the mechanical strengths of the main body is relatively constant. Thus, a local weakening of the main body and/or of the outer surface can be avoided. Preferably, the material thickness of the main body, at least in the part of the main body forming the outer surface, should be in a range between 0.03 mm to 3 mm, in order to achieve a mechanically stable main body. By using a hollow tube as a main body, the manufacturing costs of the main body can be reduced.

In a preferred embodiment, the ratio between the predetermined material thickness and an outer diameter of the outer surface is in a range between 0.01 and 0.3 , especially in a range between 0.05 and 0.09 . The outer diameter of the outer surface can be two times the curvature radius of the outer surface. Alternatively, the outer diameter of the outer surface could also be the diameter of the smallest possible circle surrounding the outer surface in a cutting plane, wherein this cutting plane is in particular perpendicular to the center axis. Should the ratio between the predetermined material thickness and the outer diameter of the outer surface lie in a range between 0.01 and 0.3 a relatively mechanically stable and reliable outer surface is achieved. Should the ratio between the predetermined material thickness and the outer diameter lie in a range between 0.05 and 0.09, the tone created by a misaligned scaler in relation to the outer surface can be easily recognized by the human hearing.

According to the present invention, the main body comprises glass, especially silicate glass. By using glass, a main body having a good wear resistance can be achieved, as glass is a relatively hard material. This is extremely important as the scaler contacts the outer surface and/or the coating during the training, in order to remove the coating from the outer surface. Thus, the outer surface is subjected to mechanical wear due to the scaler. In particular, the glass can be an borosilicate glass. By choosing silicate glass, the outer surface of the main body can be manufactured in a cost-efficient way. In particular, the main body can consist of glass, especially borosilicate glass. In other words the whole main body can be made out of glass, especially silicate glass. Alternatively and/or additionally, the main body can comprise ceramic material, especially zirconium oxide. By using ceramic material, a main body having a very high hardness can be achieved, thus, resulting in a good endurance of the scaling training tool.

In particular, the outer surface of the main body is transparent and/or colored in a color different to the color of the coating, at least in the region coated with the coating. By choosing a transparent material and/or by coloring the outer surface differently to the coating, the removal of the coating from the outer surface can easily be recognized.

Preferably, the outer surface is cylindrically shaped and/or wherein the outer surface forms an outer cylindrical surface, especially of the hollow tubular main body. By designing the outer surface cylindrically, an outer surface is achieved that can easily be manufactured. By designing the outer surface as an outer cylindrical surface, especially of a hollow tubular main body, the manufacturing costs of the scaling training tool can be reduced even further. Furthermore, by designing the outer surface as an outer cylindrical surface, the coating of the outer surface can be done easily. Thus, the manufacturing and/or the preparing of the scaling training tool can be simplified.

In particular, the outer surface can be fully coated with the coating. By fully coating the outer surface with the coating, the training surface of the scaling training tool can be increased. Thus, such a scaling training tool can be used for multiple and/or long training sessions.

Further, it is preferable that the coating has a material thickness, wherein in particular the material thickness of the coating is in a range of 0,01 mm to 1 mm. The material thickness of the coating is preferably the material thickness in a direction normal to the outer surface coated with the coating. In particular, the decisive material thickness of the coating is the average material thickness of the coating. Should the material thickness be in a range between 0,01 mm to 1 mm, a good approximation of the material thickness of natural calculus on a human tooth can be achieved. Thus, realistic training conditions for the person to be trained can be provided, if the material thickness of the coating is in a range between 0,01 mm to 1 mm.

In particular, the ratio between the material thickness of the coating to the material thickness of the hollow main body, especially in the region of the outer surface coated with the coating, is in a range between 0.03 and 3, in particular in a range between 0.3 and 1. The applicant discovered, that choosing the ratio to be between 0.03 and 3 causes a relatively realistic feeling during the removal of the coating using a scaler, in comparison to feeling caused during the removal of natural calculus form human teeth. Should the ratio lie in a range between 0.3 and 1 the damping of the sound created, due to a misaligning of the scaler in relation to the outer surface, is relatively small.

Preferably, the coating is a ceramic coating or the coating contains ceramic material. By using a ceramic coating and/or a material containing ceramic material, a relatively light-weight coating can be achieved, thus, resulting in a scaling training tool easy to handle. Furthermore, due to the usage of ceramic material in the coating a good approximation of the hardness of natural calculus can be achieved. The ceramic material could for example be a ceramic material containing an oxide, such as zirconium oxide, and/or a ceramic material containing a silicate. In a preferred embodiment, at least 10% of the weight of the coating is made out of a ceramic material.

Preferably, the coating comprises plaster and/or a primer, especially a water-based primer, and/or wherein the coating consists of plaster and a primer, especially a water-based primer. The primer could for instance be a polymer dispersed in water usually applied to improve painting adhesion. By using plaster and/or a primer, the mechanical properties of natural calculus can be approximated relatively well. Furthermore, by using a primer and/or plaster, the coating adheres similarly to the outer surface of the main body as natural calculus does on human teeth. Thus, by using a coating comprising plaster and/or a primer, and/or consisting of plaster and a primer, a realistic training condition can be achieved. The usage of a water-based primer results in a cost effective coating. Furthermore, by using a water-based primer the environmental impact caused by the primer can be reduced and/or eliminated.

In a preferred embodiment, 40% to 95%, preferably 50% to 80%, of the weight of the coating is plaster and/or wherein 5% to 60%, preferably 20% to 50%, of the weight of the coating is a primer, especially a water-based primer. Should 40% to 95%, of the weight of the coating be plaster, the density of the coating is a good approximation of natural calculus. Should 50% to 80% of the weight of the coating be plaster, the hardness of the coating is comparable to the hardness of natural calculus. In case 5% to 60% of the weight of the coating is a primer, especially a water-based primer, the mechanical bonding between the coating and the outer surface of the main body is comparable to the mechanical bonding of natural calculus. Should 20% to 50% of the weight of the coating be made out of a primer, the strength of the coating is comparable to the strength of natural calculus. Thus, resulting in a realistic training scenario.

In particular, the main body is bounded, in the direction of the center axis, by end faces, wherein the end faces are plain, and/or wherein the end faces are parallel to each other and/or perpendicular to the center axis. By bounding the main body in the direction of the center axis by plain or parallel end faces, the main body can be easily manufactured. Should the end faces be perpendicular to the center axis, the main body can easily be placed on level surfaces. For example the main body can be made of a hollow tube, wherein this tube is bound in the direction of the center axis (positive and negative direction) by planar end faces, wherein both of these bounding end faces are perpendicular to the center axis.

Another aspect of the invention can relate to a method for training the removal of calculus. This method comprises the steps of:
- providing a scaling training tool as described above and below;
- providing a scaler for removing calculus and
- applying the scaler to the scaling training tool.

This method of training the removal of calculus results in a realistic training scenario for the person to be trained. The above mentioned features and preferred embodiments of the scaler training tool can be realized in the training tool used in the method for training the removal of calculus.

Another aspect of the invention can also relate to the usage of a scaler training tool, as described above and below, in or for the training of removing calculus from human teeth.

Another aspect of the invention can relate to a method for making and/or preparing a scaling training tool, especially as described above and below, comprising the steps of:
- providing a main body; and
- coating of an outer surface of the main body.

Thus, this method can be used to make and/or to prepare a scaling training tool for training students and/or other operators. Due to the capability of the main body to be recoated with a coating, the scaler training tool can be reused and, thus, results in a cost efficient device for training the removal of calculus.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- Fig. 1: schematically shows a scaling training tool according to the invention along the center axis,
- Fig.2: schematically shows a scaling training tool according to the invention in an isometric view,
- Fig.3: schematically shows a training situation for training the removal of calculus using a scaling training tool according to the invention.

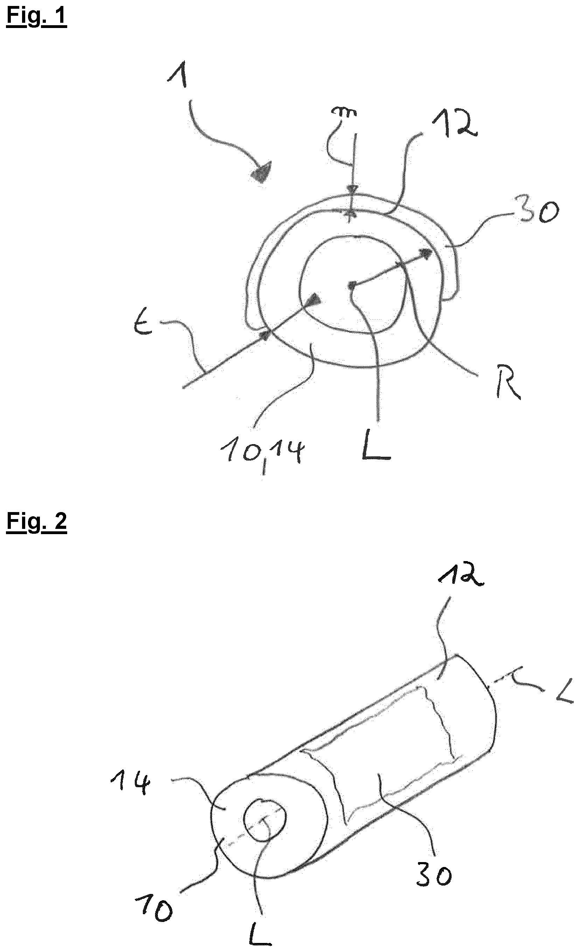

**Figure 1** shows a scaling training tool 1, especially for training the usage of an ultrasonic scaler 50 for removing calculus. The scaling training tool 1 comprises a main body 10, wherein the main body 10 is a hollow body designed as a hollow tube. This hollow tube has open ends along the center axis L. Alternatively, the hollow tube - forming the main body 10 - can also have closed end sections and/or closed end faces 14. Thus, the interior of the hollow main body 10 can be completely separated from the surrounding. The main body 10 extends along the center axis L. The main body 10 comprises an outer surface 12, wherein the normal of the outer surface 12 is directing away from the center axis L and, wherein the outer surface 12 has a constant curvature radius R in a plane perpendicular to the center axis L. The center point of this constant curvature radius R of the outer surface 12 lies on the center axis L of the main body 10. Therefore, the outer surface 12 of the main body 10 is convexly shaped. The main body 10 is having a predetermined material thickness t. In order to avoid local weakening of the outer surface 12 the material thickness t of the main body 10 is constant, at least in the region of the outer surface 12. The outer surface 12 is at least partly coated with a coating 30, wherein this coating 30 has a material thickness m in a direction normal to the outer surface 12. The coating 30 might contain ceramic material and/or comprises plaster and/or a primer, especially a water-based primer. Along the center axis L the main body 10 is bounded by end faces 14. These end faces 14 are planar and perpendicularly orientated in respect to the center axis L.

**In** **figure 2****,** another embodiment of a scaling training tool 1 according to the invention is presented. In principal the scaling training tool 1 presented in figure 2 could be the same scaling training tool 1 as presented in figure 1. The scaling training tool 1 presented in figure 2 is also having a main body 10, which is designed as a hollow body. The outer surface 12 of the main body 10 is bounding the main body 10 in a direction perpendicular to the center axis L, wherein the outer surface 12 of the main body 10 is at least partly coated with the coating 30. As can be seen in figure 2, the outer surface 12 is convexly shaped, as the outer surface 12 is cylindrically shaped in order to approximate the outer contour or outer surface of a human tooth. The main body 10 is integrally formed and is made out of glass. This glass can be transparent and/or colored. Preferably, the color of the glass is different to the color of the coating 30. The end face 14 bounds the main body 10 in a direction parallel to the center axis L.

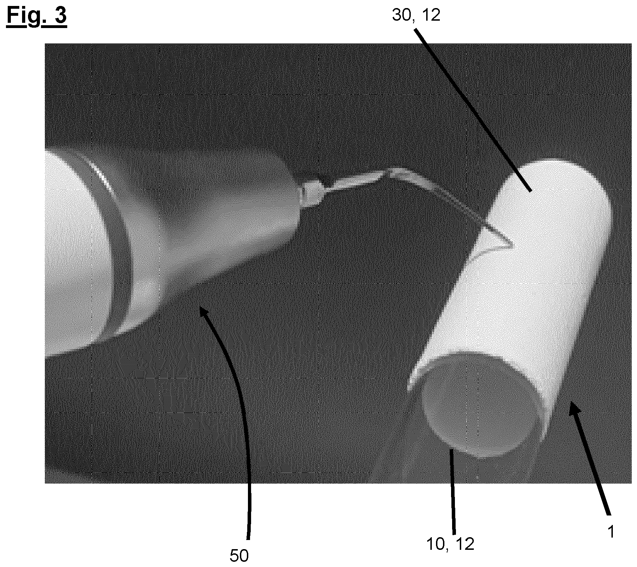

In **figure 3****,** a training situation for training the removal of calculus using a scaling training tool 1 and a scaler 50 is schematically shown. As can be seen in figure 3, the scaler 50, especially the removal tip of the scaler 50, is engaged and/or applied to the outer surface 12 of the main body 10. The main body 10 is made out of a transparent material, especially out of glass. The outer surface 12 of the main body 10 forms an outer cylindrical surface of the hollow tubular main body 10, wherein the outer surface 12 is at least partly coated with the white coating 30. This coating 30 comprises plaster and a water-based primer, as well as a ceramic material. Due to the hollow design of the main body 10 a sound is created, if the removal tip of the scaler 50 is misapplied to the training tool 1. Due to this created noise the trained person is instantly notified of the misapplication of the removal tip of the scaler 50 in relation to the normal of the outer surface 12 coated with the coating 30. Thus, the scaling training tool 1 is capable of efficiently training the proper usage of a scaler 50 for removing calculus from a human tooth.

### Reference signs:

- 1: - scaling training tool
- 10: - main body
- 12: - outer surface
- 14: - end face
- 30: - coating
- 50: - scaler
- L: - center axis
- m: - material thickness of the coating 30
- R: - curvature radius of the outer surface 12
- t: - material thickness of the main body 10

## Claims

1. Scaling training tool (1), especially for training the usage of an ultrasonic scaler for removing calculus, comprising
a main body (10),
wherein the main body (10) extends along a center axis (L) and comprises an outer surface (12),
wherein the outer surface (12) is at least partly coated with a coating (30), and
wherein the outer surface (12) is shaped, preferably convexly shaped,
cheracterized in that
the main body (10) is a hollow tube and wherein the main body (10) comprises glass.

2. Scaling training tool (1) according to claim 1,
wherein at least that part of the outer surface (12) which is coated with the coating (30) has a constant curvature radius (R).

3. Scaling training tool (1) according to claim 2,
wherein the center point of the curvature radius (R) of the outer surface (12) lies on the center axis (L) of the main body (10).

4. Scaling training tool (1) according to claim 3,
wherein the main body (10) has a length in the direction of the center axis (L),
wherein the ratio of the curvature radius (R) to the length of the main body (10) is in a range between 0.001 and 0.1, especially in a range between 0.01 and 0.1.

5. Scaling training tool (1) according to one of the preceeding claims,
wherein the hollow tube has a predetermined material thickness (t) at least in the region of the outer surface (12) coated with the coating (30).

6. Scaling training tool (1) according to claim 5,
wherein the ratio between the predetermined material thickness (t) and an outer diameter of the outer surface (12) is in a range between 0.01 and 0.3, especially in a range between 0.05 and 0.09.

7. Scaling training tool (1) according to one of the preceeding claims,
wherein the main body (10) comprises silicate-glass.

8. Scaling training tool (1) according to one of the preceeding claims,
wherein the outer surface (12) is cylindrically shaped and/or
wherein the outer surface (12) forms an outer cylindrical surface, especially of the hollow tubular main body (10).

9. Scaling training tool (1) according to one of the preceeding claims,
wherein the coating (30) has a material thickness (m),
wherein in particular the material thickness (m) of the coating (30) is in a range of 0,01 mm to 1 mm.

10. Scaling training tool (1) according to one of the preceeding claims,
wherein the coating (30) is a ceramic coating or
wherein the coating (30) contains ceramic material.

11. Scaling training tool (1) according to one of the preceeding claims,
wherein the coating (30) comprises plaster and/or a primer, especially a water-based primer, and/or
wherein the coating (30) consists of plaster and a primer, especially a water-based primer.

12. Scaling training tool (1) according to claim 11,
wherein 40% to 95%,, preferably 50% to 80%, of the weight of the coating (30) is plaster and/or
wherein 5% to 60%, preferably 20% to 50%, of the weight of the coating (30) is a primer, especially a water-based primer.

13. Scaling training tool (1) according to one of the preceeding claims,
wherein the main body (10) is bounded, in the direction of the center axis (L), by end faces (14),
wherein the end faces (14) are plane, and/or
wherein the end faces (14) are parallel to each other and/or perpendicular to the center axis (L).

14. Method for training the removal of calculus,
comprising the steps:
- providing a scaling training tool (1) according to one of the proceeding claims;
- providing a scaler (50) for removing calculus; and
- applying the scaler (50) to the scaling training tool (1).

15. Method for making and/or preparing a scaling training tool (1), especially according to one of the preceeding claims,
comprising the steps of:
- providing a main body (10);
- coating of an outer surface (12) of the main body (10).

## Patentansprüche

1. Scaler-Trainingsgerät (1), insbesondere zum Trainieren der Verwendung eines Ultraschall-Scalers zur Entfernung von Zahnstein, umfassend
einen Grundkörper (10),
wobei der Grundkörper (10) sich entlang einer Mittelachse (L) erstreckt und
eine äußere Oberfläche (12)umfasst,
wobei die äußere Oberfläche (12) zumindest teilweise mit einer Beschichtung (30) beschichtet ist, und
wobei die äußere Oberfläche (12), vorzugsweise konvex, geformt ist, **dadurch gekennzeichnet, dass** der Grundkörper (10) ein Hohlrohr ist und der Grundkörper (10) Glas umfasst.

2. Scaler-Trainingsgerät (1) gemäß Anspruch 1,
wobei zumindest der mit der Beschichtung (30) beschichtete Teil der äußeren Oberfläche (12) einen konstanten Krümmungsradius (R) aufweist.

3. Scaler-Trainingsgerät (1) gemäß Anspruch 2,
wobei der Mittelpunkt des Krümmungsradius (R) der äußeren Oberfläche (12) auf der Mittelachse (L) des Grundkörpers (10) liegt.

4. Scaler-Trainingsgerät (1) gemäß Anspruch 3,
wobei der Grundkörper (10) eine Länge in Richtung der Mittelachse (L) aufweist,
wobei das Verhältnis des Krümmungsradius (R) zur Länge des Grundkörpers (10) in einem Bereich zwischen 0,001 und 0,1, insbesondere in einem Bereich zwischen 0,01 und 0,1, liegt.

5. Scaler-Trainingsgerät (1) gemäß einem der vorstehenden Ansprüche,
wobei das Hohlrohr zumindest im Bereich der mit der Beschichtung (30) beschichteten äußeren Oberfläche (12) eine vorbestimmte Materialstärke (t) aufweist.

6. Scaler-Trainingsgerät (1) gemäß Anspruch 5,
wobei das Verhältnis zwischen der vorbestimmten Materialstärke (t) und einem Außendurchmesser der äußeren Oberfläche (12) in einem Bereich zwischen 0,01 und 0,3, insbesondere in einem Bereich zwischen 0,05 und 0,09, liegt.

7. Scaler-Trainingsgerät (1) gemäß einem der vorstehenden Ansprüche,
wobei der Grundkörper (10) Silikatglas umfasst.

8. Scaler-Trainingsgerät (1) gemäß einem der vorstehenden Ansprüche,
wobei die äußere Oberfläche (12) zylindrisch geformt ist und/oder
wobei die äußere Oberfläche (12) eine äußere zylindrische Oberfläche, insbesondere des hohlrohrförmigen Grundkörpers (10), bildet.

9. Scaler-Trainingsgerät (1) gemäß einem der vorstehenden Ansprüche,
wobei die Beschichtung (30) eine Materialstärke (m) aufweist,
wobei insbesondere die Materialstärke (m) der Beschichtung (30) in einem Bereich von 0,01 mm bis 1 mm liegt.

10. Scaler-Trainingsgerät (1) gemäß einem der vorstehenden Ansprüche,
wobei die Beschichtung (30) eine keramische Beschichtung ist oder
wobei die Beschichtung (30) keramisches Material enthält.

11. Scaler-Trainingsgerät (1) gemäß einem der vorstehenden Ansprüche,
wobei die Beschichtung (30) Gips und/oder eine Grundierung, insbesondere eine Grundierung auf Wasserbasis, umfasst, und/oder
wobei die Beschichtung (30) aus Gips und einer Grundierung, insbesondere einer Grundierung auf Wasserbasis, besteht.

12. Scaler-Trainingsgerät (1) gemäß Anspruch 11,
wobei 40 % bis 95 %, vorzugsweise 50 % bis 80 %, des Gewichts der Beschichtung (30) Gips sind und/oder
wobei 5 % bis 60 %, vorzugsweise 20 % bis 50 %, des Gewichts der Beschichtung (30) eine Grundierung, insbesondere eine Grundierung auf Wasserbasis, sind.

13. Scaler-Trainingsgerät (1) gemäß einem der vorstehenden Ansprüche,
wobei der Grundkörper (10) in Richtung der Mittelachse (L) durch Stirnflächen (14) begrenzt ist,
wobei die Stirnflächen (14) eben sind, und/oder
wobei die Stirnflächen (14) parallel zueinander und/oder senkrecht zur Mittelachse (L) sind.

14. Verfahren zum Trainieren der Entfernung von Zahnstein,
umfassend die Schritte:
- Bereitstellen eines Scaler-Trainingsgeräts (1) gemäß einem der vorstehenden Ansprüche;
- Bereitstellen eines Scalers (50) zur Entfernung von Zahnstein; und
- Aufbringen des Scalers (50) auf dem Scaler-Trainingsgerät (1).

15. Verfahren zur Herstellung und/oder Vorbereitung eines Scaler-Trainingsgeräts (1), insbesondere gemäß einem der vorstehenden Ansprüche,
umfassend die Schritte:
- Bereitstellen eines Grundkörpers (10);
- Beschichten einer äußeren Oberfläche (12) des Grundkörpers (10).

## Revendications

1. Outil d'apprentissage du détartrage (1), en particulier pour l'apprentissage de l'utilisation d'un détartreur à ultrasons pour l'élimination du tartre, comprenant
un corps principal (10),
le corps principal (10) s'étendant le long d'un axe central (L) et présentant une surface extérieure (12),
la surface extérieure (12) étant au moins partiellement revêtue d'un revêtement (30), et
la surface extérieure (12) étant mise en forme, de préférence en forme convexe, **caractérisé en ce que**
le corps principal (10) est un tube creux et le corps principal (10) comprend du verre.

2. Outil d'apprentissage du détartrage (1) selon la revendication 1,
dans lequel au moins la partie de la surface extérieure (12) qui est revêtue d'un revêtement (30) présente un rayon de courbure constant (R).

3. Outil d'apprentissage du détartrage (1) selon la revendication 2,
dans lequel le point central du rayon de courbure (R) de la surface extérieure (12) se trouve sur l'axe central (L) du corps principal (10).

4. Outil d'apprentissage du détartrage (1) selon la revendication 3,
dans lequel le corps principal (10) présente une longueur dans la direction de l'axe central (L),
le rapport du rayon de courbure (R) sur la longueur du corps principal (10) est dans une plage comprise entre 0,001 et 0,1, en particulier dans une plage comprise entre 0,01 et 0,1.

5. Outil d'apprentissage du détartrage (1) selon l'une des revendications précédentes,
dans lequel le tube creux présente une épaisseur de matériau prédéterminée (t) au moins dans la région de la surface extérieure (12) revêtue du revêtement (30).

6. Outil d'apprentissage du détartrage (1) selon la revendication 5,
dans lequel le rapport entre l'épaisseur de matériau prédéterminée (t) et un diamètre extérieur de la surface extérieure (12) est dans une plage comprise entre 0,01 et 0,3, en particulier dans une plage comprise entre 0,05 et 0,09.

7. Outil d'apprentissage du détartrage (1) selon l'une des revendications précédentes,
dans lequel le corps principal (10) comprend du verre silicaté.

8. Outil d'apprentissage du détartrage (1) selon l'une des revendications précédentes,
dans lequel la surface extérieure (12) est mise en forme cylindrique, et/ou
la surface extérieure (12) forme une surface cylindrique extérieure, en particulier du corps principal tubulaire creux (10).

9. Outil d'apprentissage du détartrage (1) selon l'une des revendications précédentes,
dans lequel le revêtement (30) présente une épaisseur de matériau (m),
en particulier, l'épaisseur de matériau (m) du revêtement (30) est dans une plage de 0,01 mm à 1 mm.

10. Outil d'apprentissage du détartrage (1) selon l'une des revendications précédentes,
dans lequel le revêtement (30) est un revêtement céramique, ou
le revêtement (30) contient un matériau céramique.

11. Outil d'apprentissage du détartrage (1) selon l'une des revendications précédentes,
dans lequel le revêtement (30) comprend du plâtre et/ou un apprêt, en particulier un apprêt à base d'eau, et/ou
le revêtement (30) est constitué de plâtre et d'un apprêt, en particulier d'un apprêt à base d'eau.

12. Outil d'apprentissage du détartrage (1) selon la revendication 11,
dans lequel 40 % à 95 %, de préférence 50 % à 80 %, du poids du revêtement (30) est du plâtre, et/ou
5 % à 60 %, de préférence 20 % à 50 %, du poids du revêtement (30) est un apprêt, en particulier un apprêt à base d'eau.

13. Outil d'apprentissage du détartrage (1) selon l'une des revendications précédentes,
dans lequel le corps principal (10) est délimité, dans la direction de l'axe central (L), par des faces d'extrémité (14),
les faces d'extrémité (14) sont planes, et/ou
les faces d'extrémité (14) sont parallèles entre elles et/ou perpendiculaires à l'axe central (L).

14. Procédé d'apprentissage de l'élimination du tartre,
comprenant les étapes consistant à :
- fournir un outil d'apprentissage du détartrage (1) selon l'une des revendications précédentes ;
- fournir un détartreur (50) pour éliminer le tartre ; et
- appliquer le détartreur (50) à l'outil d'apprentissage du détartrage (1).

15. Procédé de fabrication et/ou de réalisation d'un outil d'apprentissage du détartrage (1), en particulier selon l'une des revendications précédentes,
comprenant les étapes consistant à :
- fournir un corps principal (10) ;
- revêtir une surface extérieure (12) du corps principal (10).
